# EUROPÄISCHE PATENTSCHRIFT

(11) **EP 3 614 008 B1**
(45) Veröffentlichungstag und Bekanntmachung des Hinweises auf die Patenterteilung: **06.01.2021**
(21) Anmeldenummer: 18189660.6
(22) Anmeldetag: 20.08.2018
(51) Int. Cl.: F16D 23/12, F16D 48/06

(54) **VERFAHREN ZUM BETRIEB EINES ANTRIEBSSTRANGES EINES FAHRZEUGS MIT EINEM KUPPLUNGSAGGREGAT ZUR ÜBERTRAGUNG VON DREHMOMENT**
METHOD FOR OPERATING A DRIVETRAIN OF A VEHICLE WITH A CLUTCH UNIT FOR TRANSMITTING TORQUE
PROCÉDÉ DE FONCTIONNEMENT D'UNE CHAÎNE CINÉMATIQUE D'UN VÉHICULE DOTÉE D'UNE UNITÉ EMBRAYAGE DESTINÉE À TRANSFÉRER LE COUPLE DE ROTATION

(43) Veröffentlichungstag der Anmeldung: 26.02.2020
(73) Patentinhaber: GKN Automotive Ltd., West Midlands, B37 7YE (GB)
(72) Erfinder: WELLER, Markus, 57612 Kettenhausen (DE); RESVOLL, Erik, 53572 Bruchhausen (DE); OBERBICHLER, Fabian, 39030 Mühlwald (IT); RAFFIN, Peter, 39030 Kiens (IT); SCHNITZLER, Axel, 53340 Meckenheim (DE); ZIMMERMANN, Mark, 53332 Bornheim (DE)
(74) Vertreter: Rössler, Matthias

(56) Entgegenhaltungen:
- JP-A- 2008 167 633
- US-A1- 2009 124 456
- US-A1- 2017 259 804

## Beschreibung

Die vorliegende Erfindung betrifft ein Verfahren zum Betrieb eines Antriebsstranges eines Fahrzeuges mit einem Kupplungsaggregat, insbesondere zur Übertragung und/oder zur Verteilung von Drehmoment.

Die Erfindung betrifft insbesondere eine Methode für eine Fahrdynamik-Regelung bei bedarfsorientierten Allrad-Systemen und/oder aktiven Achssperren und in diesem Zusammenhang angepasst eingerichtete Fahrzeuge, bei denen Informationen hinsichtlich des aktuellen Motormoments, der Längsbeschleunigung, der Querbeschleunigung, der Gierraten (bezeichnet die Geschwindigkeit der Drehung eines Fahrzeugs um die Hochachse), des Lenkwinkels und/oder der Raddrehzahlen vorliegen. Die Erfindung betrifft insbesondere Allrad-getriebene Fahrzeuge, bei denen mittels eines elektronisch geregelten Kupplungsaggregates entweder die Hinterachse oder die Vorderachse (anteilig und/oder zeitweise) zugeschaltet werden kann. Alternativ oder kumulativ kann die Erfindung auch bei Achssperren, insbesondere aktiven Achssperren, bei denen mittels eines elektronisch geregelten Kupplungsaggregates eine Seite einer Achse von einer (in axialer Richtung) gegenüberliegenden Seite der Achse zumindest teilweise entkoppelbar ist, angewendet werden. Hierdurch kann eine bedarfsorientierte Drehmomentverteilung zwischen zwei Rädern einer Achse vorgenommen werden. Bei dem Kupplungsaggregat handelt es sich bevorzugt um ein elektromechanisches Kupplungssystem, insbesondere um eine elektronisch gesteuerte Lamellenkupplung. Unter einem elektromechanischen Kupplungssystem wird hier insbesondere ein solches Kupplungssystem bzw. Kupplungsaggregat verstanden, bei dem ein elektronischer Stellmotor (eine elektrische Maschine) zum Verstellen der Kupplungskraft vorgesehen ist. Bei einem solchen elektronischen Stellmotor ergibt sich die mechanische Kopplung regelmäßig zwischen dem Motordrehwinkel (Drehbewegung) und dem Kupplungs-Verstellweg (translatorische Bewegung).

Zur Ansteuerung eines entsprechenden Kupplungsaggregats ist es bekannt, dass diesem eine elektronische Steuereinheit (ECU) zugeordnet ist. Eine solche elektronische Steuereinheit kann in das Kupplungsaggregat selbst oder in ein übergeordnetes elektronisches Management-System des Fahrzeugs, insbesondere des Antriebsstrangs, integriert sein.

Um möglichst optimale fahrdynamische Eigenschaften eines bedarfsorientiert Allrad-getriebenen Fahrzeugs auch in Grenzsituationen (z.B. häufige Lastwechsel, wiederholtes Anfahren im Berg, wiederholtes Wechseln zwischen einachsigem Betrieb und Allrad-Betrieb, etc.) gewährleisten zu können, werden hohe Anforderungen an die elektronische Steuereinheit des Kupplungsaggregates gestellt. Insbesondere in den zuvor beschriebenen Grenzsituationen kann es hierbei, infolge hoher Beanspruchung, zu einer starken Erwärmung bis hin zu einer Überhitzung der elektronischen Steuereinheit, der Leistungsstufe und/oder des elektronischen Stellmotors kommen. Bekannte elektronische Steuereinheiten, Leistungsstufen und/oder elektronische Stellmotoren werden in diesen Fällen, insbesondere bei einer drohenden Überhitzung, abgeschaltet, um eine dauerhafte Schädigung der jeweiligen Komponente, insbesondere der Steuereinheit und/oder des elektronischen Stellmotors, zu vermeiden.

Nach US 2017/259 804 wird bei drohender Überhitzung von elektrischem Antrieb auf Verbrennerantrieb umgeschaltet, nach JP 2008 167 633 erfolgt ein Phasenwechsel des in den Motor fließenden Stroms.

Solche Überhitzungsschutzmaßnahmen haben jedoch den Nachteil, dass sie sich unmittelbar auf den Betrieb bzw. das Fahrverhalten des Fahrzeugs auswirken und gegebenenfalls zeitweise zu einem Ausfall des bedarfsorientierten Allrad-Systems führen. Dies kann für den Fahrer spürbare Einbußen im Fahrkomfort und/oder der Fahrdynamik zur Folge haben.

Hiervon ausgehend ist es Aufgabe der vorliegenden Erfindung, die mit Bezug auf den Stand der Technik geschilderten Probleme zumindest teilweise zu lösen. Insbesondere soll ein Verfahren zum Betrieb eines Antriebsstranges eines Fahrzeuges angegeben werden, das eine Überhitzungsschutzmaßnahme bereitstellt, die sich (fast) nicht (spürbar) auf das Fahrverhalten des Fahrzeugs auswirkt. Das Verfahren soll insbesondere dazu führen, dass auch in Grenzsituationen eine ungewollte Überhitzung der elektronischen Steuereinheit (ECU) und/oder des elektronischen Stellmotors vermieden wird, ohne dass der Fahrer einen (deutlichen) Leistungsabfall bemerkt.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betrieb eines Antriebsstranges eines Fahrzeugs mit einem Kupplungsaggregat bei. Das Kupplungsaggregat ist über eine Betätigungseinrichtung zur schaltbaren Übertragung eines Drehmoments betätigbar. Ein erster Zustand der Betätigungseinrichtung und damit ein zweiter Zustand des Kupplungsaggregats ist über eine Position einer Antriebseinheit der Betätigungseinrichtung einstellbar. Das Verfahren umfasst zumindest folgende Schritte:
a) Feststellen, dass eine erste Drehmomentanforderung an das Kupplungsaggregat zumindest innerhalb eines Intervalls von höchstens 100 ms [Millisekunde] konstant ist oder eine maximale Drehmomentabweichung von höchstens 100 Nm [Newtonmeter], bevorzugt von höchstens 20 Nm, besonders bevorzugt von höchstens 10 Nm, innerhalb des Intervalls aufweist; und
b) Feststellen, dass eine erste Position der Antriebseinheit innerhalb des Intervalls konstant ist oder eine maximale Positionsabweichung (z. B. höchstens 2 tic oder 1 tic) aufweist, die der maximalen Drehmomentabweichung (eine Änderung der Position entspricht einer Änderung der Drehmomentanforderung bzw. einer Änderung des durch das Kupplungsaggregat übertragenen Drehmoments) entspricht; und (dann)
c) Ansteuern der Antriebseinheit mit einer Ditherfunktion, wobei eine Position der Antriebseinheit kontinuierlich um die erste Position variiert wird; und
d) Beenden der Ditherfunktion, wenn die in den Schritten a) und b) formulierten Bedingungen nicht mehr erfüllt sind.

Die vorangehend angedeutete Reihenfolge der Verfahrensschritte ergibt sich bei einem regulären Betrieb des Antriebstranges des Fahrzeuges. Die Verfahrensschritte a) bis d) können während des Betriebs des Antriebsstrangs kontinuierlich wiederholt ausgeführt werden. Die Verfahrensschritte a) bis d) können zumindest teilweise auch parallel durchgeführt bzw. wiederholt werden.

Dem hier vorgeschlagenen Verfahren liegt insbesondere die Idee zugrunde, eine Ansteuerung des Kupplungsaggregats so zu beeinflussen, dass zur Erfüllung einer vorbestimmten Drehmomentanforderung bzw. zur Übertragung eines vorbestimmten Drehmoments über das Kupplungsaggregat die Antriebseinheit bewegt wird (anstatt still zu stehen). Tatsächlich erfolgt dann nämlich insbesondere auch eine Änderung des übertragenen Drehmoments.

Insbesondere umfasst die Antriebseinheit eine elektrische Maschine, die über einen Mehrphasenstrom betreibbar ist, wobei bei einer im Wesentlichen konstanten Drehmomentanforderung die elektrische Maschine stillsteht und nur eine Phase der mehreren Phasen des Mehrphasensystems mit einem Strangstrom belastet wird. Durch das Verfahren kann eine Bewegung der elektrischen Maschine sichergestellt werden, so dass mehrere Phasen mit Strangströmen belastet werden.

Insbesondere kann so eine Belastung der einen Phase (die bei konstanter Position der elektrischen Maschine mit dem Strangstrom beaufschlagt wird) reduziert werden, da durch die Bewegung der elektrischen Maschine mehrere Phasen zur Drehung der elektrischen Maschine beaufschlagt werden. Eine Überhitzung der Antriebseinheit kann so zumindest verzögert oder sogar vollständig verhindert werden.

Durch die Ditherfunktion wird die elektrische Maschine insbesondere so angesteuert, dass die elektrische Maschine einer Schwingung der Ditherfunktion mit einer Bewegung der elektrischen Maschine nachfolgen kann. Insbesondere soll die elektrische Maschine gerade eine Bewegung ausführen, so dass anstatt der einen Phase mehrere Phasen des Mehrphasensystems mit dem elektrischen Strom beaufschlagt werden.

Die Ditherfunktion ist die Ansteuerung der elektrischen Maschine, so dass die elektrische Maschine eine Bewegung um die erste Position ausführt, bzw. um die erste Position schwingt. Mit der Ditherfunktion soll die elektrische Maschine einerseits bewegt werden, wobei andererseits ein möglichst konstantes Drehmoment entsprechend der eigentlich gemäß Schritt a) vorliegenden ersten Drehmomentanforderung übertragen werden soll.

Bei dem Kupplungsaggregat handelt es sich bevorzugt um ein elektromechanisches Kupplungssystem, insbesondere um eine elektronisch gesteuerte Lamellenkupplung. Unter einem elektromechanischen Kupplungssystem wird hier insbesondere ein solches Kupplungssystem bzw. Kupplungsaggregat verstanden, bei dem ein elektronischer Stellmotor (eine elektrische Maschine als Betätigungseinrichtung) zum Verstellen der Kupplungskraft vorgesehen ist. Bei einem solchen elektronischen Stellmotor ergibt sich die mechanische Kopplung regelmäßig zwischen dem Motordrehwinkel (Drehbewegung) und dem Kupplungs-Verstellweg (translatorische Bewegung).

Insbesondere wird über das Kupplungsaggregat eine Drehmomentanforderung einer Steuereinheit durch das Verfahren z. B. der Lamellen einer Lamellenkupplung umgesetzt. Dazu wird die Betätigungseinrichtung in einen ersten Zustand verfahren und so ein zweiter Zustand des Kupplungsaggregats (eine Stellung der Lamellen zur Übertragung eines Drehmoments entsprechend der Drehmomentanforderung) eingestellt. In dem ersten Zustand der Betätigungseinrichtung weist die Antriebseinheit der Betätigungseinrichtung eine bestimmte Position auf.

Gemäß Schritt a) wird festgestellt (z. B. durch eine Steuereinheit überprüft), dass eine erste Drehmomentanforderung an das Kupplungsaggregat zumindest innerhalb eines Intervalls von höchstens 100 ms [Millisekunde] konstant ist oder eine maximale Drehmomentabweichung von 100 Nm [Newtonmeter], bevorzugt von 20 Nm, besonders bevorzugt von höchstens 10 Nm, innerhalb des Intervalls aufweist.

Gemäß Schritt b) wird festgestellt, dass eine erste Position der Antriebseinheit innerhalb des Intervalls konstant ist oder eine maximale Positionsabweichung aufweist, die der maximalen Drehmomentabweichung (eine Änderung der Position entspricht einer Änderung der Drehmomentanforderung bzw. einer Änderung des durch das Kupplungsaggregat übertragenen Drehmoments) entspricht.

Die Schritte a) und b) können ggf. auch gemeinsam durchgeführt werden. Insbesondere ergibt sich aus der Feststellung gemäß Schritt a) oder b) die jeweils andere Bedingung gemäß Schritt b) oder a).

Insbesondere umfasst die Antriebseinheit eine elektrische Maschine, wobei eine Drehbewegung der elektrischen Maschine in eine translatorische Bewegung zur Betätigung des Kupplungsaggregats umgewandelt wird. Die Position ist eine durch eine Steuereinheit ansteuerbare Winkelposition der Drehbewegung.

Insbesondere kann die Drehbewegung der Antriebseinheit in der Größenordnung von "tics" gesteuert werden. Insbesondere entspricht ein tic einem (jeweils gleichen) Winkelbetrag von 5 bis 30 Winkelgrad, insbesondere von 5 bis 10 Winkelgrad. Bevorzugt kann eine Drehbewegung von 360 Winkelgrad in 42 tics oder 64 tics aufgeteilt werden.

Bevorzugt ist die Position anhand von Winkelbeträgen bestimmbar. Insbesondere ist der durch die Steuereinheit einstellbare kleinste Winkelbetrag genau ein tic.

Insbesondere entspricht bei der in Schritt a) bzw. b) festgestellten (ersten) Position eine Drehbewegung um einen Winkelbetrag von 10 Winkelgrad einer Änderung eines übertragenden Drehmoments von mindestens 0,1 Nm und/oder von höchstens 25 Nm, bevorzugt von mindestens 1 Nm und/oder von höchstens 15 Nm.

Insbesondere wird also überprüft, ob die Antriebseinheit nur in einem eingeschränkten Maß bewegt wird (also eine Drehbewegung ausführt) oder sogar stillsteht. In diesem Fall ist eine Überhitzung möglich und erwartbar, da insbesondere z. B. nur eine Phase des Mehrphasensystems durch den zur Ansteuerung der ersten Position erforderlichen elektrischen Strom belastet bzw. beaufschlagt wird. Wird also festgestellt, dass die Antriebseinheit nicht ausreichend bewegt wird und dass eine Überhitzung vorliegen bzw. eintreten kann, wird gemäß Schritt c) eine Ditherfunktion eingeleitet, durch die eine Position der Antriebseinheit insbesondere kontinuierlich um die erste Position variiert wird.

Die Position wird dabei insbesondere um ein geringes Maß variiert, so dass einerseits die elektrische Antriebseinheit gedreht (und mehrere Phasen des Mehrphasensystems mit elektrischem Strom beaufschlagt werden) und andererseits das übertragene Drehmoment nur soweit geändert wird, dass der Fahrkomfort nicht oder nur unwesentlich beeinträchtigt wird.

Gemäß Schritt d) wird die Ditherfunktion insbesondere dann beendet, wenn eine Bewegung der Antriebseinheit in ausreichendem Maß wieder vorliegt (z. B. aufgrund einer geringen oder einer wechselnden Drehmomentanforderung).

Insbesondere wird das Verfahren mit den Schritten a) bis d) nur eingeleitet, wenn die erste Drehmomentanforderung an das Kupplungsaggregat größer ist als ein erster Grenzwert.

Insbesondere beträgt die erste Drehmomentanforderung mindestens 500 Nm, bevorzugt mindestens 800 Nm, besonders bevorzugt mindestens 1.000 Nm.

Insbesondere wird das Verfahren dann durchgeführt, wenn eine (unzulässige Überhitzung einer Komponente der Antriebseinheit (z. B. die Leistungselektronik, etc.) zu erwarten ist. Eine Überhitzung ist bei der Übertragung von hohen Drehmomenten eher zu erwarten, da dazu hohe elektrische Ströme erforderlich sind, durch die das Kupplungsaggregat in den gewünschten Zustand verfahren wird. Insbesondere wird das Verfahren mit den Schritten a) bis d) nur eingeleitet, wenn eine Überhitzungswarnung der Antriebseinheit vorliegt. Insbesondere kann z. B. eine Temperaturmessung oder eine rechnerische und/oder modellbasierte Temperaturbestimmung durchgeführt werden. Die Überhitzungswarnung kann als ein Signal einer Steuereinheit gesetzt werden, so dass das Verfahren nur nach Setzen des Signals durchgeführt wird.

Die Antriebseinheit kann eine elektrische Maschine umfassen, wobei eine Drehbewegung der elektrischen Maschine in eine translatorische Bewegung zur Betätigung des Kupplungsaggregats umgewandelt wird. Die Position ist eine durch eine Steuereinheit ansteuerbare Winkelposition der Drehbewegung. Die Position ist durch die Steuereinheit in Winkelbeträgen von mindestens 5 Winkelgrad und höchstens 30 Winkelgrad ("tics") ansteuerbar.

Insbesondere umfasst Schritt c), dass die Position zumindest zwischen einer zweiten Position und einer dritten Position variiert, wobei die zweite Position und die dritte Position in voneinander unterschiedlichen Drehrichtungen der Antriebseinheit um jeweils
- mindestens 15 Winkelgrad, bevorzugt mindestens 20 Winkelgrad, besonders bevorzugt mindestens 25 Winkelgrad; und/oder
- höchstens 100 Winkelgrad, bevorzugt höchstens 75 Winkelgrad, besonders bevorzugt höchstens 45 Winkelgrad
von der ersten Position beabstandet sind.

Insbesondere sind die zweite Position und die dritte Position im Wesentlichen gleich weit von der ersten Position beabstandet angeordnet.

Insbesondere entspricht bei der in Schritt b) festgestellten ersten Position eine Drehbewegung um einen Winkelbetrag von 10 Winkelgrad einer Änderung eines übertragenden Drehmoments von mindestens 0,1 Nm und/oder von höchstens 25 Nm, bevorzugt von mindestens 1 Nm und/oder von höchstens 15 Nm.

Insbesondere umfasst Schritt c), dass die Position zumindest zwischen einer zweiten Position und einer dritten Position variiert, wobei die zweite Position einer zweiten Drehmomentanforderung und die dritte Position einer dritten Drehmomentanforderung entspricht, wobei sich die zweite Drehmomentanforderung und die dritte Drehmomentanforderung um höchstens 150 Nm, insbesondere um höchstens 100 Nm, bevorzugt um höchstens 50 Nm voneinander unterscheiden. Insbesondere unterscheidet sich eine erste Drehmomentanforderung der ersten Position um den jeweils gleichen Betrag von der zweiten und der dritten Drehmomentanforderung.

Insbesondere umfasst Schritt c), dass die Position zumindest zwischen einer zweiten Position und einer dritten Position variiert, wobei eine Frequenz der Ditherfunktion zwischen 0,2 und 4 Hertz, insbesondere zwischen 0,5 und 2 Hertz, beträgt.

Insbesondere weist die Ditherfunktion ein sinuswellenförmiges Signal auf, so dass die Antriebseinheit sinusförmig um die erste Position (mit der Amplitude des Differenzbetrags von zweiter Position und dritter Position) schwingt. Andere Signalformen sind selbstverständlich möglich.

Die zweite Position und die dritte Position können während Schritt c) variieren oder unterschiedlich (z. B. in Abhängigkeit von der vorliegenden Drehmomentanforderung, etc.) gewählt werden.

Insbesondere umfasst die Antriebseinheit eine elektrische Maschine, die über einen Mehrphasenstrom betreibbar ist, wobei bei einer im Wesentlichen konstanten Drehmomentanforderung die elektrische Maschine stillsteht und nur eine Phase der mehreren Phasen mit einem Strangstrom belastet wird. Durch das Verfahren wird eine Bewegung der elektrischen Maschine sichergestellt, so dass mehrere Phasen mit Strangströmen belastet werden.

Mit der Ditherfunktion kann die elektrische Maschine so angesteuert werden, dass die elektrische Maschine einer Schwingung der Ditherfunktion mit einer Bewegung der elektrischen Maschine nachfolgen kann. Die Ditherfunktion weist also insbesondere eine Frequenz und eine Amplitude auf, so dass die elektrische Maschine zumindest der Frequenz (mit einer mechanischen Bewegung) nachfolgen kann.

Es wird weiter ein Fahrzeug mit einem Kupplungsaggregat vorgeschlagen, wobei dem Kupplungsaggregat eine elektronische Steuereinheit zugeordnet ist, die zur Durchführung des beschriebenen Verfahrens geeignet und eingerichtet ist. Insbesondere führt die Steuereinheit das Verfahren im Betrieb des Fahrzeugs aus.

Insbesondere dient das Kupplungsaggregat zur Übertragung von Drehmomenten, z. B. von einer Antriebsmaschine (z. B. Verbrennungskraftmaschine oder elektrischer Antrieb) des Kraftfahrzeuges auf einen Antriebsstrang. Insbesondere wird das Kupplungsaggregat zur variablen Verteilung von Drehmoment auf unterschiedlichen Achsen des Fahrzeugs eingesetzt. Die elektronische Steuereinheit kann einen programmgesteuerten Mikroprozessor und einen elektronischen Speicher, in dem ein entsprechendes Steuerprogramm abgelegt ist, umfassen.

In der Regel hat das Kupplungsaggregat eine Lamellenkupplung sowie mindestens eine (extern steuerbare) Betätigungseinheit zur Aktivierung, beziehungsweise Deaktivierung der Drehmomentübertragung. Die Betätigungseinheit kann eine elektrische Maschine, z. B. einen elektronischen Steller, insbesondere einen elektronischen Stellmotor, umfassen. Die Lamellenkupplung umfasst in der Regel mindestens ein komprimierbares Lamellenpaket, das mittels der Betätigungseinheit komprimierbar ist, um eine Drehmomentübertragung einzuleiten. Die Betätigungseinheit wird regelmäßig von der elektronischen Steuereinheit gesteuert, die entsprechend elektrische Steuerströme über entsprechende Betätigungsleitungen an die Betätigungseinheit abgibt.

Es wird auch ein System zur Datenverarbeitung vorgeschlagen, umfassend einen Prozessor, der so angepasst und/oder konfiguriert ist, dass er das hier beschriebene bzw. beanspruchte Verfahren bzw. dessen Schritte (einzeln, teilweise oder vollständig) ausführt. Weiter kann ein Computerprogramm vorgesehen sein, umfassend Befehle, die bei der Ausführung des Programms durch einen Computer diesen veranlassen, die Schritte des Verfahrens (einzeln, teilweise oder vollständig) auszuführen.

Die vorstehend im Zusammenhang mit dem Verfahren erörterten Details, Merkmale und vorteilhaften Ausgestaltungen können entsprechend auch bei dem hier vorgestellten Fahrzeug auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Es zeigen schematisch:
- Fig. 1:: ein Fahrzeug mit einem Kupplungsaggregat zur Übertragung eines Drehmoments von einer Antriebseinheit auf einen Antriebsstrang; und
- Fig. 2:: zwei Diagramme zur Darstellung des Verfahrens.

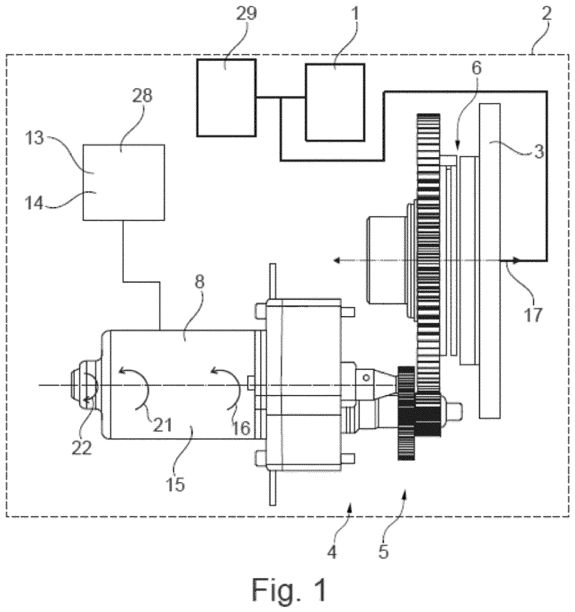

Fig. 1 zeigt ein Fahrzeug 2 mit einem Kupplungsaggregat 3 zur Übertragung eines Drehmoments von einer Antriebsmaschine 29 auf einen Antriebsstrang 1. Dem Kupplungsaggregat 3 ist eine elektronische Steuereinheit 28 zugeordnet, die zur Durchführung des vorstehend beschriebenen Verfahrens geeignet und eingerichtet ist bzw. das Verfahren durchführt. Das Kupplungsaggregat 3 ist über eine Betätigungseinrichtung 4 zur schaltbaren Übertragung eines Drehmoments betätigbar. Ein erster Zustand 5 der Betätigungseinrichtung 4 und damit ein zweiter Zustand 6 des Kupplungsaggregats 3 ist über eine Position 7 einer Antriebseinheit 7 der Betätigungseinrichtung 3 einstellbar. Die Antriebseinheit 7 ist hier eine elektrische Maschine 15, wobei eine Drehbewegung 16 der elektrischen Maschine 15 in eine translatorische Bewegung 17 zur Betätigung des Kupplungsaggregats 3 umgewandelt wird. Die Position 7 ist eine durch eine Steuereinheit 28 ansteuerbare Winkelposition der Drehbewegung 16.

Die Betätigungseinrichtung 3 wird von einer elektronischen Steuereinheit 28 gesteuert, die entsprechend elektrische Steuerströme über entsprechende Betätigungsleitungen an die Betätigungseinrichtung 3 abgibt.

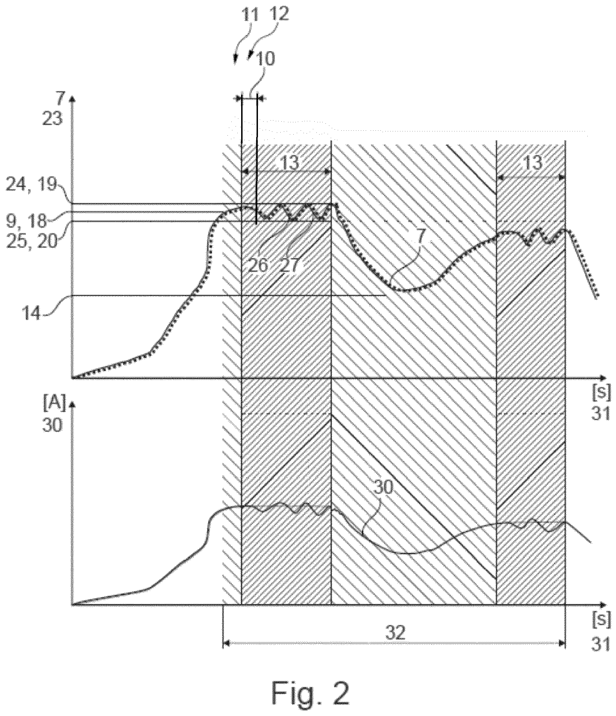

Fig. 2 zeigt zwei Diagramme zur Darstellung des Verfahrens. In dem oberen Diagramm ist auf der vertikalen Achse die (Ist-)Position 7 [Winkelbetrag] der Antriebseinheit 8 (bzw. deren Position 7, die zur Übertragung der jeweils vorliegenden Drehmomentanforderung 23 erforderlich ist) und die Drehmomentanforderung 23 [Nm] dargestellt. Auf der horizontalen Achse ist die Zeit 31 [Sekunde] aufgetragen. Die dargestellte Kurve zeigt den Verlauf der Position 7 gegenüber der Sollposition 24.

In dem unteren Diagramm ist auf der vertikalen Achse ein Effektivwert des elektrischen Stroms 30 [Ampere] dargestellt. Auf der horizontalen Achse ist die Zeit 31 aufgetragen. Die dargestellte Kurve zeigt den Verlauf des Stroms 30. Der gestrichelte Abschnitt der Kurve zeigt den ohne Durchführung des Verfahrens vorliegenden Strom 30.

Gemäß Schritt a) wird festgestellt (z. B. durch eine Steuereinheit 28 überprüft), dass eine erste Drehmomentanforderung 9 an das Kupplungsaggregat 3 innerhalb eines Intervalls 10 konstant ist oder eine maximale Drehmomentabweichung 11 innerhalb des Intervalls 10 aufweist.

Gemäß Schritt b) wird festgestellt, dass eine erste Position 18 der Antriebseinheit 8 innerhalb des Intervalls 10 konstant ist oder eine maximale Positionsabweichung 12 aufweist, die der maximalen Drehmomentabweichung 11 (eine Änderung der Position 7 entspricht einer Änderung der Drehmomentanforderung 23 bzw. einer Änderung des durch das Kupplungsaggregat 3 übertragenen Drehmoments) entspricht.

Wird festgestellt, dass die Antriebseinheit 8 nicht ausreichend bewegt wird und dass eine Überhitzung vorliegen bzw. eintreten kann, wird gemäß Schritt c) eine Ditherfunktion 13 eingeleitet, durch die eine Position 7 der Antriebseinheit 8 kontinuierlich um die erste Position 18 variiert wird.

Die Position 7 wird dabei um ein geringes Maß variiert, so dass einerseits die elektrische Antriebseinheit 8 gedreht (und mehrere Phasen des Mehrphasensystems mit elektrischem Strom 30 beaufschlagt werden) und andererseits das übertragene Drehmoment nur soweit geändert wird, dass der Fahrkomfort nicht oder nur unwesentlich beeinträchtigt wird.

Gemäß Schritt d) wird die Ditherfunktion 13 dann beendet, wenn eine Bewegung der Antriebseinheit 8 in ausreichendem Maß wieder vorliegt (z. B. aufgrund einer geringen oder einer wechselnden Drehmomentanforderung 23).

Das Verfahren mit den Schritten a) bis d) wird nur eingeleitet, wenn die erste Drehmomentanforderung 9 an das Kupplungsaggregat 3 größer ist als ein erster Grenzwert 14.

Weiter wird das Verfahren dann durchgeführt, wenn eine (unzulässige Überhitzung einer Komponente der Antriebseinheit 8 (z. B. die Leistungselektronik, etc.) zu erwarten ist. Eine Überhitzung ist bei der Übertragung von hohen Drehmomenten eher zu erwarten, da dazu hohe elektrische Ströme 30 erforderlich sind, durch die das Kupplungsaggregat 3 in den gewünschten Zustand verfahren wird.

Das Verfahren mit den Schritten a) bis d) wird nur eingeleitet, wenn eine Überhitzungswarnung der Antriebseinheit 8 vorliegt. Die Überhitzungswarnung wird als ein Signal 32 einer Steuereinheit 28 gesetzt, so dass das Verfahren nur nach Setzen des Signals 32 durchgeführt wird.

Schritt c) umfasst, dass die Position 7 zwischen einer zweiten Position 19 und einer dritten Position 20 variiert, wobei die zweite Position 19 und die dritte Position 20 in voneinander unterschiedlichen Drehrichtungen 21, 22 der Antriebseinheit 8 um bestimmte Winkelbeträge von der ersten Position 18 beabstandet sind.

Schritt c) umfasst, dass die Position 7 zwischen einer zweiten Position 19 und einer dritten Position 20 variiert, wobei die zweite Position 19 einer zweiten Drehmomentanforderung 24 und die dritte Position 20 einer dritten Drehmomentanforderung 25 entspricht. Weiter umfasst Schritt c), dass die Position 7 zwischen einer zweiten Position 19 und einer dritten Position 20 variiert, wobei eine Frequenz 26 der Schwingung 27 der Ditherfunktion 13 so gewählt wird, dass die Antriebseinheit 8 der Schwingung 27 nachgeführt wird.

### Bezugszeichenliste

- 1: Antriebsstrang
- 2: Fahrzeug
- 3: Kupplungsaggregat
- 4: Betätigungseinrichtung
- 5: erster Zustand
- 6: zweiter Zustand
- 7: (Ist-)Position
- 8: Antriebseinheit
- 9: erste Drehmomentanforderung
- 10: Intervall
- 11: maximale Drehmomentabweichung
- 12: maximale Positionsabweichung
- 13: Ditherfunktion
- 14: erster Grenzwert
- 15: Maschine
- 16: Drehbewegung
- 17: translatorische Bewegung
- 18: erste Position
- 19: zweite Position
- 20: dritte Position
- 21: erste Drehrichtung
- 22: zweite Drehrichtung
- 23: Drehmomentanforderung
- 24: zweite Drehmomentanforderung
- 25: dritte Drehmomentanforderung
- 26: Frequenz
- 27: Schwingung
- 28: Steuereinheit
- 29: Antriebsmaschine
- 30: Strom
- 31: Zeit
- 32: Signal

## Patentansprüche

1. Verfahren zum Betrieb eines Antriebsstranges (1) eines Fahrzeugs (2) mit einem Kupplungsaggregat (3), wobei das Kupplungsaggregat (3) über eine Betätigungseinrichtung (4) zur schaltbaren Übertragung eines Drehmoments betätigbar ist; wobei ein erster Zustand (5) der Betätigungseinrichtung (4) und damit ein zweiter Zustand (6) des Kupplungsaggregats (3) über eine Position (7) einer Antriebseinheit (8) der Betätigungseinrichtung (4) einstellbar ist; wobei die Antriebseinheit (8) eine elektrische Maschine (15) ist, die über einen Mehrphasenstrom betreibbar ist, wobei das Verfahren zumindest folgende Schritte umfasst:
a) Feststellen, dass eine erste Drehmomentanforderung (9) an das Kupplungsaggregat (3) zumindest innerhalb eines Intervalls (10) von höchstens 100 ms konstant ist oder eine maximale Drehmomentabweichung (11) von höchstens 100 Nm innerhalb des Intervalls (10) aufweist; und
b) Feststellen, dass eine erste Position (18) der Antriebseinheit (8) innerhalb des Intervalls (10) konstant ist oder eine maximale Positionsabweichung (12) aufweist, die der maximalen Drehmomentabweichung (11) entspricht; und
c) Ansteuern der Antriebseinheit (8) mit einer Ditherfunktion (13), wobei eine Position (7) der Antriebseinheit (8) kontinuierlich um die erste Position (18) variiert wird; und
d) Beenden der Ditherfunktion (13), wenn die in den Schritten a) und b) formulierten Bedingungen nicht mehr erfüllt sind.

2. Verfahren nach Patentanspruch 1, wobei das Verfahren mit den Schritten a) bis d) nur eingeleitet wird, wenn die erste Drehmomentanforderung (9) an das Kupplungsaggregat (3) größer ist als ein erster Grenzwert (14).

3. Verfahren nach einem der vorhergehenden Patentansprüche, wobei die erste Drehmomentanforderung (9) mindestens 800 Newtonmeter beträgt.

4. Verfahren nach einem der vorhergehenden Patentansprüche, wobei das Verfahren mit den Schritten a) bis d) nur eingeleitet wird, wenn eine Überhitzungswarnung der Antriebseinheit (8) vorliegt.

5. Verfahren nach einem der vorhergehenden Patentansprüche, wobei eine Drehbewegung (16) der elektrischen Maschine (15) in eine translatorische Bewegung (17) zur Betätigung des Kupplungsaggregats (3) umgewandelt wird, wobei die Position (7) eine durch eine Steuereinheit (16) ansteuerbare Winkelposition der Drehbewegung (16) ist; wobei die Position (7) durch die Steuereinheit (17) in Winkelbeträgen von mindestens 5 Winkelgrad und höchstens 30 Winkelgrad ansteuerbar ist.

6. Verfahren nach Patentanspruch 5, wobei Schritt c) umfasst, dass die Position (7) zumindest zwischen einer zweiten Position (19) und einer dritten Position (20) variiert, wobei die zweite Position (19) und die dritte Position (20) in voneinander unterschiedlichen Drehrichtungen (21, 22) der Antriebseinheit (8) um jeweils
• mindestens 15 Winkelgrad oder
• höchstens 100 Winkelgrad
von der ersten Position (11) beabstandet sind.

7. Verfahren nach einem der vorhergehenden Patentansprüche 5 und 6, wobei bei der in Schritt b) festgestellten ersten Position (18) eine Drehbewegung (16) um einen Winkelbetrag von 10 Winkelgrad einer Änderung einer Drehmomentanforderung (23) von mindestens 25 Newtonmetern entspricht.

8. Verfahren nach einem der vorhergehenden Patentansprüche, wobei Schritt c) umfasst, dass die Position (7) zumindest zwischen einer zweiten Position (19) und einer dritten Position (20) variiert, wobei die zweite Position (19) einer zweiten Drehmomentanforderung (24) und die dritte Position (20) einer dritten Drehmomentanforderung (25) entspricht, wobei die zweite Drehmomentanforderung (24) und die dritte Drehmomentanforderung (25) sich um höchstens 150 Newtonmeter unterscheiden.

9. Verfahren nach einem der vorhergehenden Patentansprüche, wobei Schritt c) umfasst, dass die Position (7) zumindest zwischen einer zweiten Position (19) und einer dritten Position (20) variiert, wobei eine Frequenz (26) der Ditherfunktion (13) zwischen 0,2 und 4 Hertz beträgt.

10. Verfahren nach einem der vorhergehenden Patentansprüche, wobei bei einer im Wesentlichen konstanten Drehmomentanforderung (23) die elektrische Maschine (15) still steht und nur eine Phase der mehreren Phasen mit einem Strangstrom belastet wird, wobei durch das Verfahren eine Bewegung der elektrischen Maschine (15) sichergestellt wird, so dass mehrere Phasen mit Strangströmen belastet werden, wobei die im Wesentlichen konstante Drehmomentanforderung (23) durch ein variierendes Drehmoment beantwortet wird.

11. Verfahren nach Patentanspruch 10, wobei durch die Ditherfunktion (13) die elektrische Maschine (15) so angesteuert wird, dass die elektrische Maschine (15) einer Schwingung (27) der Ditherfunktion (13) mit einer Bewegung der elektrischen Maschine (15) nachfolgen kann.

12. Fahrzeug (2) mit einem Kupplungsaggregat (3), wobei dem Kupplungsaggregat (3) eine elektronische Steuereinheit (28) zugeordnet ist, die zur Durchführung des Verfahrens nach einem der vorhergehenden Patentansprüche geeignet und eingerichtet ist.

## Claims

1. Method for operating a drive train (1) of a vehicle (2) having a clutch assembly (3), wherein the clutch assembly (3) is actuatable via an actuating device (4) for the switchable transmission of a torque; wherein a first state (5) of the actuating device (4), and thus a second state (6) of the clutch assembly (3), is settable via a position (7) of a drive unit (8) of the actuating device (4); wherein the drive unit (8) is an electrical machine (15) that is operable with a multiphase current, wherein the method comprises at least the following steps:
a) determining that a first torque request (9) to the clutch assembly (3) is constant at least within an interval (10) of at most 100 ms or has a maximum torque deviation (11) of at most 100 Nm within the interval (10); and
b) determining that a first position (18) of the drive unit (8) is constant within the interval (10) or has a maximum position deviation (12) that corresponds to the maximum torque deviation (11); and
c) controlling the drive unit (8) with a dither function (13), wherein a position (7) of the drive unit (8) is continuously varied about the first position (18); and
d) ending the dither function (13) when the conditions stated in steps a) and b) are no longer met.

2. Method according to claim 1, wherein the method is initiated with steps a) through d) only when the first torque request (9) to the clutch assembly (3) is greater than a first limit value (14).

3. Method according to one of the preceding claims, wherein the first torque request (9) is at least 800 newton meters.

4. Method according to one of the preceding claims, wherein the method is initiated with steps a) through d) only when an overheating warning for the drive unit (8) is present.

5. Method according to one of the preceding claims, wherein a rotational motion (16) of the electric machine (15) is converted into a translational motion (17) for actuating the clutch assembly (3), wherein the position (7) is an angular position of the rotational motion (16) which is controllable by the control unit (16) wherein the position (7) is controlable in angular magnitudes of at least 5 angular degrees and at most 30 angular degrees, by the control unit (17).

6. Method according to claim 5, wherein according to step c), the position (7) varies at least between a second position (19) and a third position (20), wherein the second position (19) and the third position (20), in different rotational directions (21, 22) of the drive unit (8), are each spaced apart from the first position (11) by
• at least 15 angular degrees or
• at most 100 angular degrees.

7. Method according to one of preceding claims 5 and 6, wherein in the first position (18) determined in step b), a rotational motion (16) about an angular magnitude of 10 angular degrees corresponds to a change in a torque request (23) of at least 25 newton meters.

8. Method according to one of the preceding claims, wherein according to step c), the position (7) varies at least between a second position (19) and a third position (20), wherein the second position (19) corresponds to a second torque request (24) and the third position (20) corresponds to a third torque request (25), wherein the second torque request (24) and the third torque request (25) differ from one another by at most 150 newton meters.

9. Method according to one of the preceding claims, wherein according to step c), the position (7) varies at least between a second position (19) and a third position (20), wherein a frequency (26) of the dither function (13) is between 0.2 and 4 hertz.

10. Method according to one of the preceding claims, wherein with an essentially constant torque request (23) the electric machine (15) is stopped and only one phase of the multiple phases is loaded with a phase current, wherein by use of the method a movement of the electric machine (15) is ensured, so that multiple phases are loaded with phase currents, wherein the essentially constant torque request (23) is responded to via a varying torque.

11. Method according to claim 10, wherein by means of the dither function (13), the electric machine (15) is controlled in such a way that the electric machine (15) may follow an oscillation (27) of the dither function (13) via a movement of the electric machine (15).

12. Vehicle (2) having a clutch assembly (3), wherein an electronic control unit (28) that is suited and configured for carrying out the method according to one of the preceding claims is associated with the clutch assembly (3).

## Revendications

1. Procédé de fonctionnement d'une chaîne cinématique (1) d'un véhicule (2) comprenant une unité d'embrayage (3), l'unité d'embrayage (3) pouvant être actionnée par le biais d'un dispositif d'actionnement (4) destiné à transmettre de manière commutable un couple; un premier état (5) du dispositif d'actionnement (4) et donc un deuxième état (6) de l'unité d'embrayage (3) pouvant être réglés par une position (7) d'une unité d'entraînement (8) du dispositif d'actionnement (4); l'unité d'entraînement (8) étant une machine électrique (15) qui peut être actionnée par un courant polyphasé, le procédé comprenant au moins les étapes suivantes:
a) établir qu'une première demande de couple (9) à l'unité d'embrayage (3) est constante au moins dans un intervalle (10) de 100 ms maximum ou présente un écart de couple maximum (11) de 100 Nm maximum dans l'intervalle (10); et
b) établir qu'une première position (18) de l'unité d'entraînement (8) est constante dans l'intervalle (10) ou présente un écart de position maximum (12) qui correspond à l'écart de couple maximum (11); et
c) commander l'unité d'entraînement (8) avec une fonction de vibration (13), une position (7) de l'unité d'entraînement (8) étant modifiée en continu autour de la première position (18); et
d) mettre fin à la fonction de vibration (13) lorsque les conditions formulées aux étapes a) et b) ne sont plus remplies.

2. Procédé selon la revendication 1, le procédé n'étant lancé avec les étapes a) à d) que lorsque la première demande de couple (9) à l'unité d'embrayage (3) est supérieure à une première valeur limite (14).

3. Procédé selon l'une des revendications précédentes, la première demande de couple (9) étant d'au moins 800 Newton mètres.

4. Procédé selon l'une des revendications précédentes, le procédé n'étant lancé avec les étapes a) à d) qu'en présence d'un avertissement de surchauffe de l'unité d'entraînement (8).

5. Procédé selon l'une des revendications précédentes, un mouvement de rotation (16) de la machine électrique (15) étant converti en un mouvement de translation (17) destiné à actionner l'unité d'embrayage (3), la position (7) étant une position angulaire du mouvement de rotation (16) qui peut être commandée par une unité de commande (16); la position (7) pouvant être commandée par l'unité de commande (17) à des valeurs angulaires d'au moins 5 degrés et d'au plus 30 degrés.

6. Procédé selon la revendication 5, l'étape c) comprenant le fait que la position (7) varie au moins entre une deuxième position (19) et une troisième position (20),
la deuxième position (19) et la troisième position (20) sont espacées de la première position (11), dans chacune des directions de rotation (21, 22) différentes les unes des autres de l'unité d'entraînement (8),
• d'au moins 15 degrés ou
• d'au plus 100 degrés.

7. Procédé selon l'une des revendications 5 et 6 précédentes, dans la première position (18) établie à l'étape b), un mouvement de rotation (16) d'une valeur angulaire de 10 degrés correspondant à une modification d'une demande de couple (23) d'au moins 25 Newton mètres.

8. Procédé selon l'une des revendications précédentes, l'étape c) comprenant le fait que la position (7) varie au moins entre une deuxième position (19) et une troisième position (20), la deuxième position (19) correspondant à une deuxième demande de couple (24) et la troisième position (20) correspondant à une troisième demande de couple (25), la deuxième demande de couple (24) et la troisième demande de couple (25) différant au plus de 150 Newton mètres.

9. Procédé selon l'une des revendications précédentes, l'étape c) comprenant le fait que la position (7) varie au moins entre une deuxième position (19) et une troisième position (20), une fréquence (26) de la fonction de vibration (13) étant comprise entre 0,2 et 4 Hertz.

10. Procédé selon l'une des revendications précédentes, pour une demande de couple (23) sensiblement constante, la machine électrique (15) étant à l'arrêt et une seule phase de la pluralité de phases étant chargée avec un courant de phase, le procédé assurant un mouvement de la machine électrique (15) de sorte que plusieurs phases soient chargées avec des courants de phase, la demande de couple sensiblement constante (23) ayant pour réponse un couple variable.

11. Procédé selon la revendication 10, la machine électrique (15) étant commandée par la fonction de vibration (13) de telle sorte que la machine électrique (15) puisse suivre une oscillation (27) de la fonction de vibration (13) avec un mouvement de la machine électrique (15).

12. Véhicule (2) comprenant une unité d'embrayage (3), l'unité d'embrayage (3) étant associée à une unité de commande électronique (28) qui est appropriée et adaptée pour mettre en œuvre le procédé selon l'une des revendications précédentes.
